# EUROPEAN PATENT APPLICATION

(11) **EP 1 341 071 A2**
(43) Date of publication of application: **03.09.2003**
(21) Application number: 02015079.3
(22) Date of filing: 05.07.2002
(51) Int. Cl.: G06F 1/00

(54) **Memory card**

(30) Priority: 28.02.2002 JP 2002053091
(71) Applicant: MATSUSHITA ELECTRIC INDUSTRIAL CO., LTD., Kadoma-shi, Osaka 571-8501 (JP)
(72) Inventor: Yoshimoto, Tetsuro, Kadoma-shi, Osaka 571-0058 (JP); Tanaka, Takayuki, Yao-shi, Osaka 581-0011 (JP); Mizushima, Miki, Toyonaka-shi, Osaka 560-0055 (JP); Sugita, Ryouichi, Takatsuki-shi, Osaka 569-1143 (JP)
(74) Representative: Grünecker, Kinkeldey, Stockmair & Schwanhäusser Anwaltssozietät

(57) **Abstract**

A memory card includes a nonvolatile memory chip and a controller chip. The controller chip includes a first encrypting portion and a second encrypting portion. The first encrypting portion decrypts data input to the memory card that have been encrypted using a first key that is different for each session, using the first key. The second encrypting portion encrypts the data that are decrypted by the first encrypting portion using a second key. The nonvolatile memory chip stores the data encrypted by the second encrypting portion.

## Description

### BACKGROUND OF THE INVENTION

The present invention relates to a memory card, and more particularly relates to a memory card that encrypts data to be stored in a nonvolatile memory.

Memory cards are employed for reading/writing information with digital devices such as digital cameras, PDAs, portable audio devices, cellular phones, and personal computers. Two chips, a flash memory and a controller, are mounted on a memory card. Data control between the digital device and the flash memory is implemented by a controller. In general, with a memory card, the data from the digital device are stored in the flash memory as they are, so that by monitoring the bus between the controller chip and the flash memory chip, it is possible to dump the flash memory and easily let the data analyzed.

### SUMMARY OF THE INVENTION

It is an object of the present invention to provide a memory card in which the security of writing/reading data to a nonvolatile memory chip can be increased.

A memory card according to the present invention includes a nonvolatile memory chip and a controller chip. The controller chip includes a first encrypting portion and a second encrypting portion. The first encrypting portion decrypts data input to the memory card that have been encrypted using a first key that is different for each session, using the first key. The second encrypting portion encrypts data that are decrypted by the first encrypting portion using a second key. The nonvolatile memory chip stores the data encrypted by the second encrypting portion.

According to this memory card, the data transferred between the controller chip and the nonvolatile memory chip are encrypted, so that it is difficult to analyze the data even if the nonvolatile memory chip is dumped.

Moreover, separate keys are adopted for the key used between the outside the memory chip and the controller chip (first key) and the key used between the controller chip and the nonvolatile memory chip (second key), so that even if the first key were compromised, the second key still exists, and thus the data are not easily analyzed.

Thus, according to the memory card, the security of reading/writing data to the nonvolatile memory chip can be increased.

Also, data encrypted with a first key that is different for each session are once decrypted and then encrypted a second time with a second key and stored in the nonvolatile memory chip. Consequently, if it is necessary to decrypt the data in order to perform calculations inside the card, then the data stored in the nonvolatile memory chip are more easily decrypted than if the data encrypted with the first key are stored in the nonvolatile memory chip without being decrypted by the first encrypting portion.

### BRIEF DESCRIPTION OF THE DRAWINGS

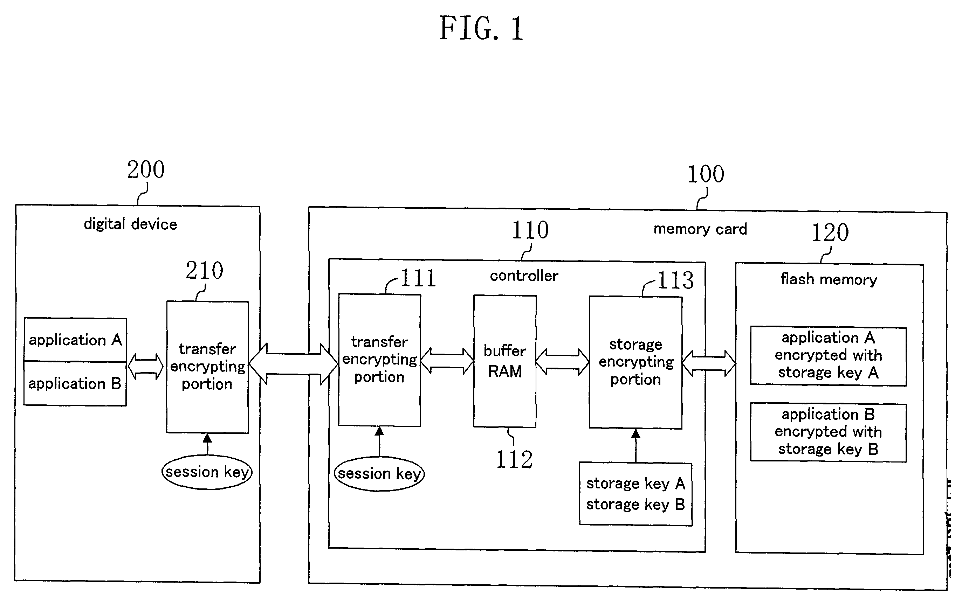

Figs. 1 to 4 are block diagrams showing the overall configuration of the memory card system according to the first through fourth embodiments of the present invention.

### DETAILED DESCRIPTION OF THE INVENTION

Hereinafter, embodiments of the present invention are described in detail with reference to the drawings. Identical or equivalent parts in the drawings are assigned identical reference numerals and duplicate descriptions thereof are omitted.

### First Embodiment

### Overall Configuration of the Memory Card System

Fig. 1 is a block diagram showing the overall configuration of the memory card system according to the first embodiment of the present invention. In the system shown in Fig. 1, a memory card 100 is inserted into a slot (not shown) of a digital device 200 (such as a digital camera, PDA, portable audio device, cellular phone, or personal computer), and data are exchanged between the digital device 200 and the memory card 100. In the transfer of data between the digital device 200 and the memory card 100, mutual authentication is performed, and then the data are encrypted with a key that is different for each session (session key).

### Digital Device 200

The digital device 200 includes a transfer encrypting portion 210. The transfer encrypting portion 210 encrypts data that are to be stored in the memory card 100 using a session key, and transfers the data to the memory card 100. The transfer encrypting portion 210 also uses the same session key as the one used when the data are encrypted by a transfer encrypting portion 111 of the memory card 100 in order to decrypt the encrypted data from the memory card 100, and transfers the decrypted data to the internal portion.

### Memory Card 100

The memory card 100 includes a controller chip 110 and a flash memory chip 120. The controller chip 110 controls the exchange of data between the digital device 200 and the flash memory chip 120. The controller chip 110 includes the transfer encrypting portion 111, a buffer RAM 112, and a storage encrypting portion 113. The transfer encrypting portion 111 decrypts encrypted data from the digital device 200 using the same session key as that used when the data are encrypted by the transfer encrypting portion 210 of the digital device 200. The transfer encrypting portion 111 also uses a session key to encrypt data read out from the flash memory 120 and transfers the data to the digital device 200. The buffer RAM 112 temporarily holds data transferred from the transfer encrypting portion 111 to the storage encrypting portion 113 and the data transferred from the storage encrypting portion 113 to the transfer encrypting portion 111. The storage encrypting portion 113 uses a storage key to encrypt data that have been decrypted by the transfer encrypting portion 111, and transfers the data to the flash memory 120. The storage encrypting portion 113 also decrypts data read out from the flash memory 120 using the same storage key as that used when the data were encrypted.

### Storing Data to the Flash Memory 120

Next, data are stored from the digital device 200 onto the flash memory 120 of the memory card 100 as described below. In the example provided below, an application A and an application B made of the program and the data inside the digital device 200 are stored onto the flash memory 120 of the memory card 100.

First, the transfer encrypting portion 210 of the digital device 200 encrypts the application A using a session key and transfers it to the memory card 100.

The application A transferred from the digital device 200 is decrypted by the transfer encrypting portion 111 of the memory card 100 using the session key. The decrypted application A is then temporarily held in the buffer RAM 112.

The application A held in the buffer RAM 112 is encrypted by the storage encrypting portion 113 using a storage key A and then transferred to the flash memory 120. Thus, the application A encrypted using the storage key A is stored in the flash memory 120.

Next, the transfer encrypting portion 210 of the digital device 200 encrypts the application B using a session key and transfers it to the memory card 100.

The application B transferred from the digital device 200 is decrypted by the transfer encrypting portion 111 of the memory card 100 using the session key. The decrypted application B is then temporarily held in the buffer RAM 112.

The application B held in the buffer RAM 112 is encrypted by the storage encrypting portion 113 using a storage key B and then transferred to the flash memory 120. Thus, the application B encrypted using the storage key B is stored in the flash memory 120.

In this manner, data are encrypted using different storage keys for each application and stored in the flash memory 120.

### Reading Out Data from the Flash Memory 120

Next, the data stored in the flash memory 120 through the above are read out to the digital device 200 as follows.

First, the application A encrypted by a storage key A is read out from the flash memory 120.

The application A read out from the flash memory 120 is decrypted in the storage encrypting portion 113 using the storage key A. The decrypted application A is then temporarily held in the buffer RAM 112.

The application A held in the buffer RAM 112 is encrypted by the transfer encrypting portion 111 using a session key and then transferred to the digital device 200.

The application A transferred from the memory card 100 is then decrypted in the transfer encrypting portion 210 of the digital device 200 using the session key.

Next, the application B encrypted by the storage key B is read out from the flash memory 120.

The application B read out from the flash memory 120 is decrypted in the storage encrypting portion 113 using the storage key B. The decrypted application B is then held temporarily in the buffer RAM 112.

The application B held in the buffer RAM 112 is encrypted by the transfer encrypting portion 111 using a session key and then transferred to the digital device 200.

The application B transferred from the memory card 100 is then decrypted in the transfer encrypting portion 210 of the digital device 200 using the session key.

Thus, data stored in the flash memory 120 are read out to the digital device 200. Effect

According to the memory card system of the first embodiment, data are encrypted between the digital device 200 and the controller chip 110 of the memory card 100 using a session key, and data are encrypted between the controller chip 110 of the memory card 100 and the flash memory chip 120 using a storage key. Consequently, even if the flash memory 120 were dumped, it would be difficult to analyze the data.

Also, there is a distinction made between the key employed between the digital device 200 and the controller chip 110 of the memory card 100 (the session key) and the key employed between the controller chip 110 and the flash memory 120 (the storage key). Consequently, even if the session key were compromised, the storage key still exists, and thus data are not easily analyzed.

Thus, according to the first embodiment, the security of writing/reading data with respect to the flash memory chip 120 can be increased.

Also, in the controller chip 110 of the memory card 100, data encrypted with a session key are temporarily decrypted by the transfer encrypting portion 111 and then encrypted once again by the storage encrypting portion 113 using a storage key. At this time, the storage encrypting portion 113 performs encryption employing a different storage key for each application. Therefore, the application stored in the flash memory 120 is more easily decrypted than if the application encrypted with a session key is stored in the flash memory 120 as it is. Also, even if the storage key A (or B) for the application A (or B) were known, this hardly leads to the analysis of the application B (or A).

### Second Embodiment

### Overall Configuration of the Memory Card System

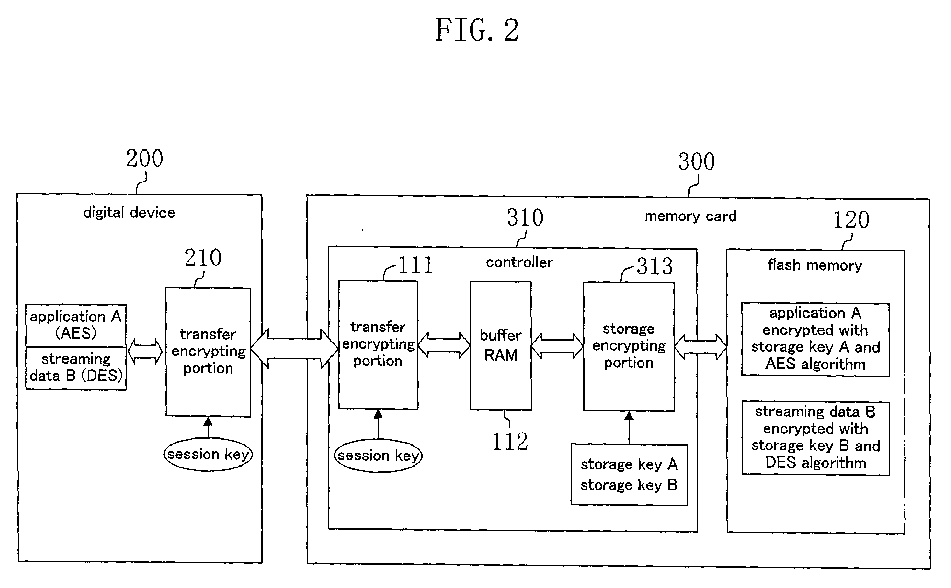

Fig. 2 is a block diagram showing the overall configuration of the memory card system according to a second embodiment of the present invention. In the system shown in Fig. 2, a memory card 300 is inserted into a slot (not shown) of the digital device 200 and data are exchanged between the digital device 200 and the memory card 300. In the transfer of data between the digital device 200 and the memory card 300, mutual authentication is performed, and then the data are encrypted with a key that is different for each session (session key).

### Digital Device 200

The transfer encrypting portion 210 of the digital device 200 employs a session key to encrypt data to be stored in the memory card 300, and then transfers the data to the memory card 300. At this time, the transfer encrypting portion 210 encrypts information that indicates the encryption algorithm of the data to be stored in the memory card 300 along with the data, and transfers these to the memory card 300.

### Memory Card 300

The memory card 300 includes a controller chip 310 and a flash memory chip 120. The controller chip 310 controls the exchange of data between the digital device 200 and the flash memory chip 120. The controller chip 310 includes the transfer encrypting portion 111, a buffer RAM 112, and a storage encrypting portion 313. The storage encrypting portion 313 uses a storage key to encrypt data that have been decrypted by the transfer encrypting portion 111, and transfers the data to the flash memory 120. At this time, the storage encrypting portion 313 encrypts the data with the encryption algorithm found in the information indicating the encryption algorithm of the data. The storage encrypting portion 313 also decrypts data that have been read out from the flash memory 120 using the same storage key as that used when the data were encrypted.

### Storing Data to the Flash Memory 120

Next, data are stored from the digital device 200 onto the flash memory 120 of the memory card 300 as described below. The example given here is a case where two applications in the digital device 200 are stored onto the flash memory 120 of the memory card 300. The two applications are described below.

The first application is an application for managing personal information (hereinafter, referred to as application A), and has the following characteristics.
a) The speed at which it is read out from the flash memory 120 is not a particular consideration.
b) It requires a high degree of security because it is an application related to personal information.

The second application is streaming music data (hereinafter, streaming data B), and has the following characteristics.
a) It is a large volume of music data, and requires high read out speeds from the flash memory 120 to the digital device 200. That is, it requires a high throughput.

First, the transfer encrypting portion 210 of the digital device 200 uses a session key to encrypt the application A, and transfers it to the memory card 300. At this time, the information specifying the encryption algorithm of the application A (referred to here as the AES) is encrypted together with the application A, and these are transferred to the memory card 300.

The application A and the information specifying the encryption algorithm, which are transferred from the digital device 200, are decrypted by the transfer encrypting portion 111 of the memory card 300 using the session key. The decrypted application A and information specifying the encryption algorithm are then temporarily held in the buffer RAM 112.

The application A held in the buffer RAM 112 is encrypted by the storage encrypting portion 313 using a storage key A and transferred to the flash memory 120. At this time, the storage encrypting portion 313 references the information held in the RAM 112 that specifies the encryption algorithm, in order to encrypt the application A with the AES. Thus, the application A encrypted by the AES algorithm using the storage key A is stored in the flash memory 120.

Next, the transfer encrypting portion 210 of the digital device 200 uses a session key to encrypt the streaming data B, and transfers the data to the memory card 300. At this time, the information specifying the encryption algorithm of the streaming data B (referred to here as the DES) is encrypted together with the streaming data B, and these are transferred to the memory card 300.

The streaming data B and the information specifying the encryption algorithm, which are transferred from the digital device 200, are decrypted by the transfer encrypting portion 111 of the memory card 300 using the session key. The decrypted streaming data B and information specifying the encryption algorithm are then temporarily held in the buffer RAM 112.

The streaming data B held in the buffer RAM 112 are encrypted by the storage encrypting portion 313 using a storage key B and transferred to the flash memory 120. At this time, the storage encrypting portion 313 references the information held in the RAM 112 that specifies the encryption algorithm and encrypts the streaming data B by the DES. Thus, the streaming data B encrypted by the DES algorithm using the storage key B are stored in the flash memory 120.

Thus, data encrypted by different encryption algorithms for each application are stored in the flash memory 120. It should be noted that data are read out from the flash memory 120 in the same manner as was described in the first embodiment.

### Effect

Thus, according to the memory card system of the second embodiment, an encryption algorithm that corresponds to the application to be stored in the flash memory chip 120 is employed by the storage encrypting portion 313. That is, it employs a relatively strong encrypting algorithm (here, the AES) for the application A, for which the read out speed from the flash memory chip 120 is not an issue but which requires a rather high degree of security, and employs a relatively weak encryption algorithm (here, the DES) for the streaming data B, which demands a high throughput. In this manner, data to be stored in the flash memory chip 120 can be encrypted by an encryption algorithm that fits their application, and then stored.

### Third Embodiment

### Overall Configuration of the Memory Card System

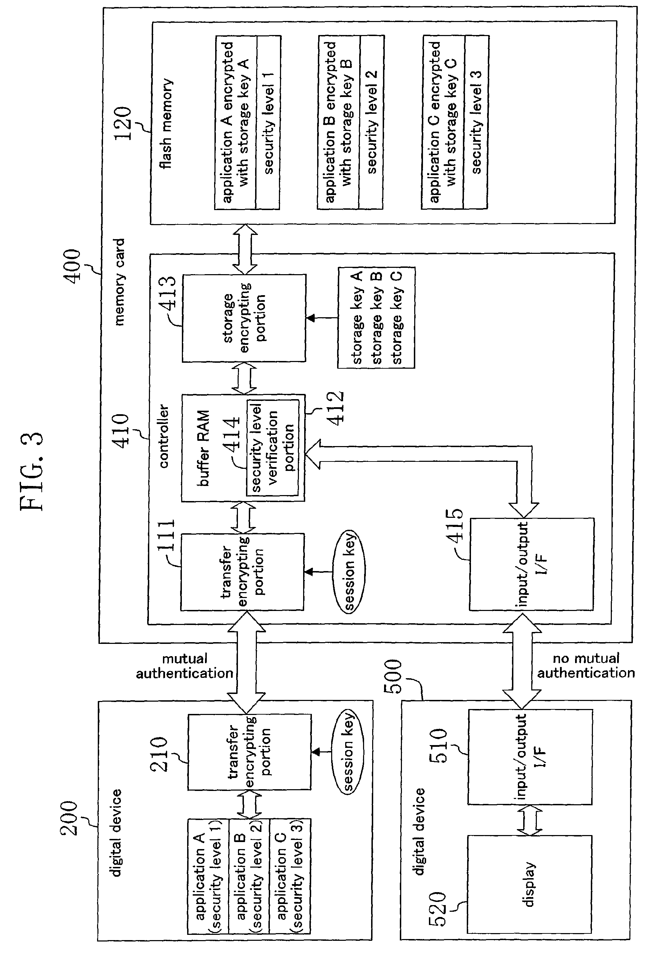

Fig. 3 is a block diagram showing the overall configuration of the memory card system according to a third embodiment of the present invention. In the system shown in Fig. 3, a memory card 400 is inserted into a slot (not shown) of a digital device 200 or 500 and data are exchanged between the digital device 200 or 500 and the memory card 400. In the transfer of data between the digital device 200 and the memory card 400, mutual authentication is performed, and then the data are encrypted with a key that is different for each session (session key). On the other hand, in the transfer of data between the digital device 500 and the memory card 400, mutual authentication and data encryption are not implemented.

### Digital Device 500

The digital device 500 initiates communication with the memory 400 through a simple password, without performing mutual authentication. The digital device 500 includes an input/output interface 510 and a display 520. The input/output interface 510 is between the memory card 400 and the digital device 500. The display 520 displays data that are read out from the memory card 400, for example.

### Memory Card 400

The memory card 400 includes a controller chip 410 and a flash memory chip 120. The controller chip 410 controls the exchange of data between the digital device 200 or 500 and the flash memory 120. The controller chip 410 includes the transfer encrypting portion 111, a buffer RAM 412, a storage encrypting portion 413, a security level verification portion 414, and an input/output interface 415. The buffer RAM 412 temporarily holds data that are transferred from the transfer encrypting portion 111 or the input/output interface 415 to the storage encrypting portion 413 and data that are transferred from the storage encrypting portion 413 to the transfer encrypting portion 111 or the input/output interface 415. The storage encrypting portion 413 encrypts the data held in the buffer RAM 412 using a storage key and transfers the data to the flash memory chip 120. The storage encrypting portion 413 also decrypts data read out from the flash memory 120 using the same storage key as was used when the data were encrypted. The security level verification portion 414, when there has been a request to read or change (rewrite) data stored in the flash memory 120, determines the necessity of the mutual authentication to identify whether the digital device making the request is the digital device 200, which performs mutual authentication, or the digital device 500, which does not perform mutual authentication. Then, it reads out and recognizes the security information added to the data from the flash memory 120 and selects, in accordance with this recognized information, whether to allow/forbid the data to be read out to the digital device or allow/forbid the data to be changed.

### Downloading to the Flash Memory Chip 120

Next, data are downloaded to the flash memory 120 inside the memory card 400 as follows. The example provided here is of a case where applications A to C in the digital device 200 are downloaded onto the flash memory 120 of the memory card 400.

Information indicating the security level (security information) has been added to the applications A to C inside the digital device 200. The security level indicates whether to allow/forbid the data to be read out or changed. In this system there are three security level stages (security levels 1 to 3) that have been set, as shown below.

### Security Level 1

A request to read out data and a request to change data from a digital device that does not perform mutual authentication are not allowed. A request to read out data and a request to change data from a digital device that does perform mutual authentication are allowed.

### Security Level 2

A request to read out data from a digital device that does not perform mutual authentication is allowed, but a request to change data is not allowed. A request to read out data and a request to change data from a digital device that does perform mutual authentication are allowed.

### Security Level 3

A request to read out data and a request to change data are allowed from both the digital device that does not perform mutual authentication and the digital device that does perform mutual authentication.

Here, application A has been given security information of security level 1. Application B has been given security information of security level 2. Application C has been given security information of security level 3.

First, the transfer encrypting portion 210 of the digital device 200 encrypts the application A (including security information) using a session key and transfers it to the memory card 400.

The application A (including security information) that is transferred from the digital device 200 is decrypted by the transfer encrypting portion 111 of the memory card 400 using the session key. The decrypted application A (including security information) is then held temporarily in the buffer RAM 412.

The application A (including security information) held in the buffer RAM 412 is encrypted by the storage encrypting portion 413 using a storage key A and transferred to the flash memory 120. Thus, the application A (including security information) that is encrypted using the storage key A is stored in the flash memory 120. Likewise, applications B and C (including their security information) are stored in the flash memory 120.

In this manner, the applications A to C, which are given security information, are stored in the flash memory 120.

### Reading Out and Changing Data Stored in the Flash Memory 120

When a request to read out or change an application in the flash memory 120 is given from the digital device to the memory card 400, then the security level verification portion 414 determines the necessity of mutual authentication between the memory card 400 and the digital device making the request. Accordingly, the security level verification portion 414 identifies whether the digital device making the request is the digital device 200, which is the type that performs mutual authentication between it and the memory card 400, or the digital device 500, which is the type that does not perform mutual authentication.

Next, the security level verification portion 414 reads out the security information, which has been added to the application for which the read out or change request has been made, to the buffer RAM 412 from the flash memory 120 via the storage encrypting portion 413. Based on the security information read out to the buffer RAM 412, the security level verification portion 414 identifies the security level of the application for which the read out or change request has been made.

The security level verification portion 414 restricts the reading and changing of data with respect to the digital device making the request, in accordance with the digital device and the security level that are identified as mentioned above, as follows.

### In the Case of Security Level 1

This corresponds to a case in which a request to read out or change the application A has been made.

When the request originates from the digital device 500, which does not perform mutual authentication, the application A is not allowed to be read out or changed. More specifically, a control for halting the operation of the input/output interface 415 is performed. As a result, the contents of the application A stored in the flash memory 120 cannot be referenced or changed from the digital device 500.

On the other hand, when the request originates from the digital device 200, which does perform mutual authentication, the application A is allowed to be read out and changed. Accordingly, the application A stored in the flash memory 120 can be read out and changed. That is, the information of the application A stored in the flash memory 120 can be referenced and changed from the digital device 200.

### In the Case of Security Level 2

This corresponds to a case in which a request to read out or change the application B has been made.

When the request originates from the digital device 500, which does not perform mutual authentication, the application B is allowed to be read out but not allowed to be changed. More specifically, a control is performed for stopping the operation of the input/output interface 415 only when there has been a request to change data. As a result, the information of the application B stored in the flash memory 120 can be referenced but cannot be changed from the digital device 500.

On the other hand, when the request originates from the digital device 200, which does perform mutual authentication, the application B is allowed to be read out and changed. As a result, the contents of the application B stored in the flash memory 120 can be referenced and changed from the digital device 200.

### In the Case of Security Level 3

This corresponds to a case in which a request to read out or change the application C has been made.

In this case, the application C is allowed to be read out and changed regardless of whether the request originates from the digital device 200 or the digital device 500. As a result, the contents of the application C stored in the flash memory 120 can be referenced and changed from both the digital device 200 and the digital device 500.

### Effect

As set forth above, according to the memory card system of the third embodiment, a security level is set for each application A to C stored in the flash memory 120, and the applications A to C can be protected in accordance with their security level. For example, an application such as electronic money or points that is stored in the flash memory 120 should allow its contents to be changed (increase/decrease the money information or point information, for example) only by specific digital devices. On the other hand, there are instances where access to the application contents (money information or point information, for example) may be allowed for devices other than the specific digital devices. In this case, the security level of the application can be set to level 2. Accordingly, the application contents are protected while also being made accessible to devices other than the specific digital devices.

Also, extra flash memory 120 space can be used as a user area by a digital device such as a PC.

Moreover, if the digital device 200 is owned by an individual, then the security level can be freely set to protect personal information.

### Fourth Embodiment

### Overall Configuration of the Memory Card System

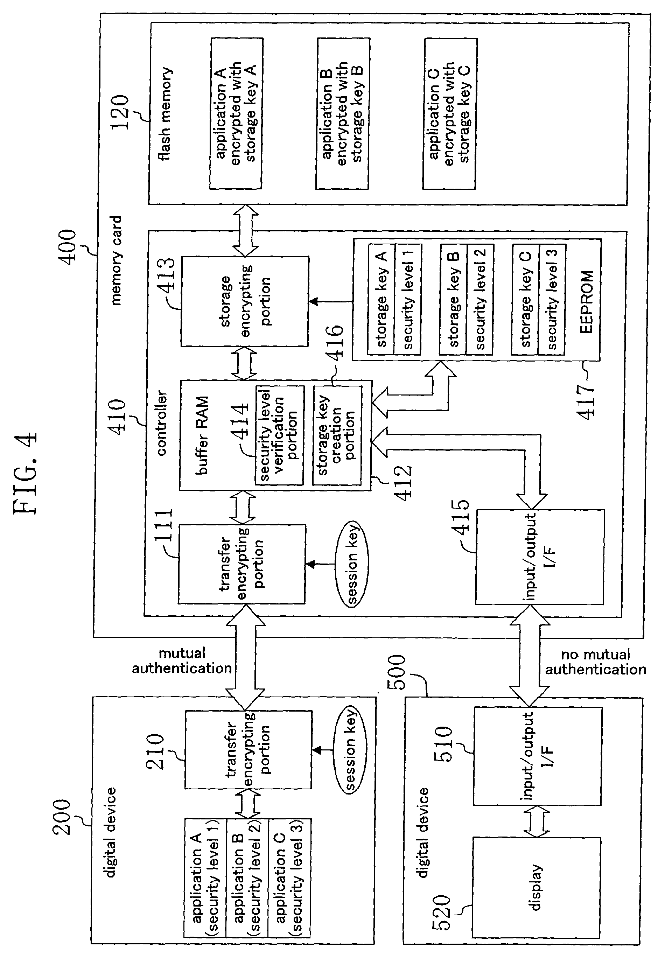

Fig. 4 is a block diagram showing the overall configuration of the memory card system according to a fourth embodiment of the present invention. In the system shown in Fig. 4, in addition to the system configuration shown in Fig. 3, a storage key creation portion 416 is provided in the controller chip 410 of the memory card 400.

The security level verification portion 414 in the controller chip 410 checks (identifies) the security information of the application decrypted by the transfer encrypting portion 111 and held in the buffer RAM 412.

The storage key creation portion 416 prepares a different storage key for each application and adds (assigns) the security information of the application identified by the security level verification portion 414 to the prepared storage key. Thus, for each application, the storage key creation portion 416 creates a storage key that has been given security information. The storage key (to which security information has been added) created by the storage key creation portion 416 is stored in the EEPROM 417.

The security level verification portion 414, when there is a request to read out or change (rewrite) data stored in the flash memory 120, determines the necessity of the mutual authentication to identify whether the digital device that made the request is the digital device 200, which performs mutual authentication, or the digital device 500, which does not perform mutual authentication. Then, it reads out and identifies the security information for the data from the EEPROM 417 with the storage key, and selects whether to allow/forbid the data to be read out to the digital device and whether to allow/forbid the data to be changed based on this identified information.

### Downloading to the Flash Memory Chip 120

Next, data are downloaded onto the flash memory 120 in the memory card 400 as follows. The example presented here is of a case where applications A to C in the digital device 200 are downloaded onto the flash memory 120 of the memory card 400.

As in the third embodiment, security information in the form of security levels 1 to 3 are added to the applications A to C in the digital device 200.

First, the transfer encrypting portion 210 of the digital device 200 encrypts the application A (including security information) using a session key and transfers it to the memory card 400.

The application A (including security information) that is transferred from the digital device 200 is decrypted by the transfer encrypting portion 111 of the memory card 400 using the session key. The decrypted application A (including security information) is then temporarily held in the buffer RAM 412.

The security information of the application A held in the buffer RAM 412 is checked (identified) by the security level verification portion 414.

Then, the storage key creation portion 416 prepares a storage key A for encrypting the application A and adds the security information of the application A to the storage key A. The storage key A, to which the security information (security level 1) of the application A has been added, is stored in the EEPROM 417.

The application A (not including security information) held in the buffer RAM 412 is encrypted by the storage encrypting portion 413 using the storage key A (stored in the EEPROM 417) and transferred to the flash memory 120. Thus, the application A (not including security information) encrypted using the storage key A is stored in the flash memory 120.

Likewise, a storage key B, to which security information for the application B (security level 2) has been added, and a storage key C, to which security information for the application C (security level 3) has been added, are stored in the EEPROM 417 and the encrypted applications B and C (not including security information) are stored in the flash memory 120.

### Reading Out and Changing Data Stored in the Flash Memory 120

When a request to read out or change the application in the flash memory 120 is made from a digital device to the memory card 400, the security level verification portion 414 determines the necessity of the mutual authentication between the digital device from which the request originated and the memory card 400. Thus, the security level verification portion 414 identifies whether the digital device making the request is the digital device 200, which is a type that performs mutual authentication with the memory card 400, or the digital device 500, which is a type that does not perform mutual authentication.

Next, the security level verification portion 414 reads out the security information that corresponds to the application for which there has been a request to read out or change, from the EEPROM 417 to the buffer RAM 412 based on the storage key. The security level verification portion 414 then identifies the security level of the application for which there has been a request to read out or change, based on the security level information read out to the buffer RAM 412.

In the same manner as in the third embodiment, the security level verification portion 414 restricts the reading and changing of data with respect to the digital device making the request, in accordance with the digital device and the security level identified as above.

### Effect

With the memory card system according to the fourth embodiment, the application security information is stored on the EEPROM 417 of the controller chip 410. Consequently, it is difficult to decipher security information from outside the controller chip 400, and as a result, the security of data stored on the flash memory 120 is improved.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A memory card comprising a nonvolatile memory chip and a controller chip, the controller chip including:
a first encrypting portion for decrypting data input to the memory card that have been encrypted using a first key different for each session, using the first key; and
a second encrypting portion for encrypting the data that are decrypted by the first encrypting portion using a second key;
wherein the nonvolatile memory chip stores the data encrypted by the second encrypting portion.

2. The memory card according to claim 1, wherein the second encrypting portion uses a key that corresponds to an application to which the data decrypted by the first encrypting portion belong, as the second key.

3. The memory card according to claim 1, wherein the second encrypting portion encrypts the data decrypted by the first encrypting portion with an encrypting algorithm that corresponds to an application to which the data belong.

4. The memory card according to claim 1, wherein the controller chip further includes a security level verification portion, and
when there is a request to read out or rewrite data stored in the nonvolatile memory chip, the security level verification portion identifies a security level of the data and allows the data to be read out or rewritten when the identified security level allows reading or rewriting; and
the security level indicates a level to which reading and/or rewriting are restricted.

5. The memory card according to claim 1, wherein
the memory card further comprises:
a security level verification portion for identifying a security level of the data decrypted by the first encrypting portion; and
a key creation portion for preparing a key that corresponds to a security level identified by the security level verification portion;
wherein the security level indicates a level to which reading and/or rewriting are restricted; and
the second encrypting portion uses a key prepared by the key creation portion as the second key.

6. The memory card according to claim 5, wherein
when there is a request to read out or rewrite data stored in the nonvolatile memory chip, the security level verification portion identifies a security level of the data based on the second key, and allows the data to be read out or rewritten when the identified security level allows reading or rewriting.
